# EUROPEAN PATENT SPECIFICATION

(11) **EP 3 028 907 B1**
(45) Date of publication and mention of the grant of the patent: **21.02.2018**
(21) Application number: 14196106.0
(22) Date of filing: 03.12.2014
(51) Int. Cl.: B60S 3/04

(54) **Device for cleaning vehicle wheels**
Vorrichtung zum Reinigen von Fahrzeugrädern
Dispositif de nettoyage de roues de véhicule

(43) Date of publication of application: 08.06.2016
(73) Proprietor: Hedson Technologies AB, 232 37 Arlöv (SE)
(72) Inventor: Klemedtson, Anders, 224 78 Lund (SE)
(74) Representative: Valea AB

(56) References cited:
- EP-A1- 0 338 509
- EP-A1- 2 527 215
- FR-A5- 2 230 169
- US-A1- 2008 041 426

## Description

### TECHNICAL FIELD

The present invention relates to a device for cleaning vehicle wheels. To this end the cleaning device comprises, inter alia, a cleaning medium container with a cleaning liquid, a cleaning chamber which is provided on top of the cleaning medium container and having flushing nozzles provided therein, a driving device which is configured to bring a vehicle wheel which is to be located in the cleaning chamber between the flushing nozzles to move relative to said flushing nozzles and/or to bring said flushing nozzles to move relative to the vehicle wheel, and a pump device which is configured to bring the cleaning liquid to flow from the cleaning medium container to the flushing nozzles and from said flushing nozzles as flushing jets towards the vehicle wheel which is to be located in the cleaning chamber for cleaning the vehicle wheel while said flushing nozzles and/or the vehicle wheel are/is brought to move by means of the driving device.

### BACKGROUND OF THE INVENTION

Devices for cleaning vehicle wheels by means of flushing nozzles are already known in a plurality of different embodiments and operate in general satisfactory. The handling of the vehicle wheels for location thereof in position for cleaning in the cleaning devices however, is not satisfactory. Vehicle wheels, particularly for lorries, are very heavy and the handling thereof consequently arduous to the personnel working with the cleaning devices. A few attempts have been made to equip devices for cleaning vehicle wheels with some type of lifting device in order to facilitate the handling of the vehicle wheels during location thereof in the cleaning device for cleaning and during removal of the vehicle wheels after the cleaning thereof. These lifting devices have not operated satisfactory.

EP 2 527 215 discloses a spraying device for a wheel washing machine, particularly for vehicle wheels having a minimum radius and a maximum radius, said machine comprising: a washing chamber in which at least two parallel rollers are arranged for a wheel designed to be washed and dried to be laid and rotatably driven thereon in a washing position; supply means for supplying washing liquid, having a longitudinal axis and arranged in said washing chamber, ejector means, for ejecting said washing liquid in the form of substantially flat jets, transversely facing said wheel to be washed and formed in said supply means, said ejector means comprising at least an ejecting groove which is diagonally oriented with respect to said longitudinal axis of said supply means, with a jet dividing and deflecting apparatus mounted in front of it, for dividing and deflecting said jets into at least two jets defining respective spraying areas.

### SUMMARY OF THE INVENTION

The object of the cleaning device according to the present invention is consequently to facilitate for the personnel at cleaning devices for vehicle wheels of the above-mentioned type to handle the vehicle wheels.

This object is arrived at according to the invention since the cleaning device defined above also comprises a lifting device which is mounted on the cleaning device and which is configured, from a start position for rolling the vehicle wheel which is to be located in the cleaning chamber on to said lifting device, to lift by a vertical or substantially vertical movement the vehicle wheel up to a position in front of the opening into the cleaning chamber to permit movement of the vehicle wheel into the cleaning chamber and location of the vehicle wheel between the flushing nozzles therein for cleaning of the vehicle wheel, and configured, after cleaning and movement of the vehicle wheel out of the cleaning chamber and on to the lifting device in front of the opening into the cleaning chamber, to lower by a vertical or substantially vertical movement the vehicle wheel to the start position for unrolling of the vehicle wheel from the lifting device.

Thus, since the cleaning device within the scope of the invention can be configured with a lifting device as defined above, a vehicle wheel can without problems be moved into and out of the cleaning chamber without subjecting the personnel operating the cleaning device to harmful loads on their bodies and the vertical or substantially vertical movements of the lifting device are simple and straightforward.

By mounting the lifting device on the cleaning device, it is easy to move the cleaning device when necessary for maintenance, change of cleaning liquid etc..

By, according to a preferred embodiment of the cleaning device of the invention, mounting the lifting device on a front side of the cleaning device, the configuration of the lifting device can be simplified in order to be able to perform, from the start position, the vertical or substantially vertical movement of the vehicle wheel up to the position right in front of the opening into the cleaning chamber and the vertical or substantially vertical movement of the vehicle wheel down from the position right in front of the opening into the cleaning chamber to the start position respectively.

Since, according to another preferred embodiment of the cleaning device of the invention, the lifting device only comprises a rod which is rotatably mounted externally on the front side of the cleaning device and an angulary configured bracket for a vehicle wheel, which bracket is immovably connected to the rod, the lifting device has a very simple construction and function and is thereby easy to operate and maintain/repair.

Additional details of the lifting device are defined in the dependent claims.

### BRIEF DESCRIPTION OF THE DRAWINGS

The above-mentioned and other characterizing features and the advantages therewith will be further described below with reference to the accompanying drawings, in which
fig. 1 with a perspective view schematically illustrates the cleaning device with the lifting device in start position for rolling-on of a vehicle wheel;
fig. 2 with a perspective view schematically illustrates the cleaning device with the lifting device in start position for rolling-on of a vehicle wheel and with a door into a cleaning chamber in the cleaning device standing open;
fig. 3 with a perspective view schematically illustrates the cleaning device with the lifting device in start position for rolling-on of a vehicle wheel and with a vehicle wheel on the lifting device;
fig. 4 with a perspective view schematically illustrates the cleaning device with the lifting device in a position after commence of the lifting of the vehicle wheel;
fig. 5 with a perspective view schematically illustrates the cleaning device with the lifting device in a position after having finished lifting of the vehicle wheel; and
fig. 6 with a perspective view schematically illustrates the cleaning device with the lifting device in a position after having finished lifting of the vehicle wheel and movement of the vehicle wheel into the cleaning chamber.

### DETAILED DESCRIPTION OF A PREFERRED EMBODIMENT

The present invention is below described through a preferred embodiment thereof. It should be noted however, that this embodiment is intended to explain the principles of the present invention and not to limit the scope thereof as it is defined in the subsequent claims.

As is apparent from the accompanying drawings, the present invention relates to a device for cleaning of vehicle wheels, wherein said cleaning device comprises, inter alia, a lifting device.

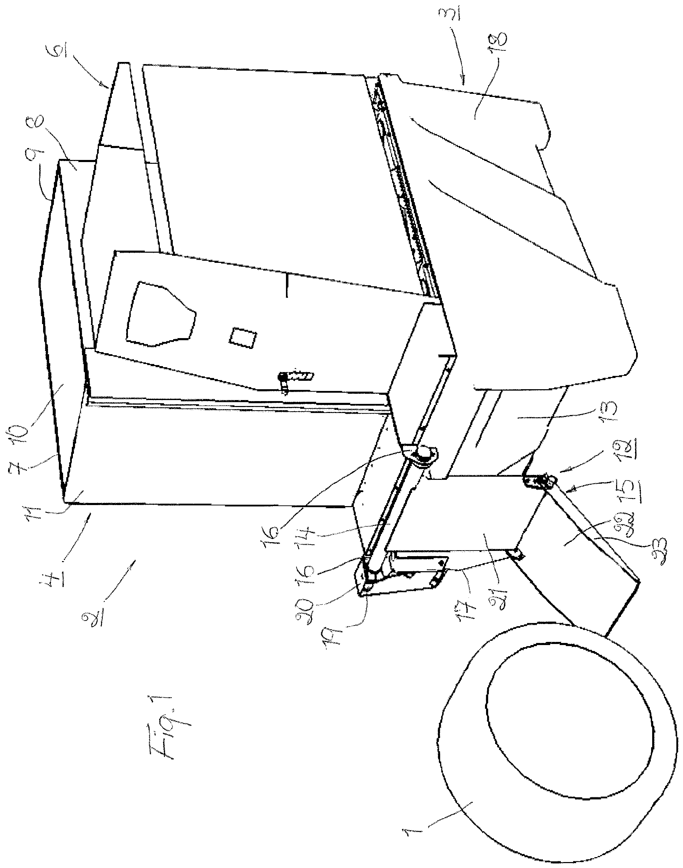

Even if the vehicle wheel in principal can be found in any kind of vehicle and be made of any suitable material, the illustrated cleaning device is configured for cleaning particularly the wheels from a car and it is also such a vehicle wheel which is shown in fig. 1 to 6. The schematically illustrated vehicle wheel 1 comprises as usually a rim and a tire which is mounted on the rim.

The cleaning device 2 illustrated in fig. 1 to 6 comprises a cleaning medium container 3 and, provided on top thereof, a housing 4 defining a cleaning chamber 5 as well as a housing 6 containing necessary driving and pump devices for the operation of the cleaning device. There is a cleaning liquid in the cleaning medium container 3, e.g. water with or without cleaning medium additives. The cleaning liquid can, if desired but not necessarily, contain granules of e.g. plastic and of a size of about 1-10 mm in order to obtain a blasting effect during cleaning of the vehicle wheel 1.

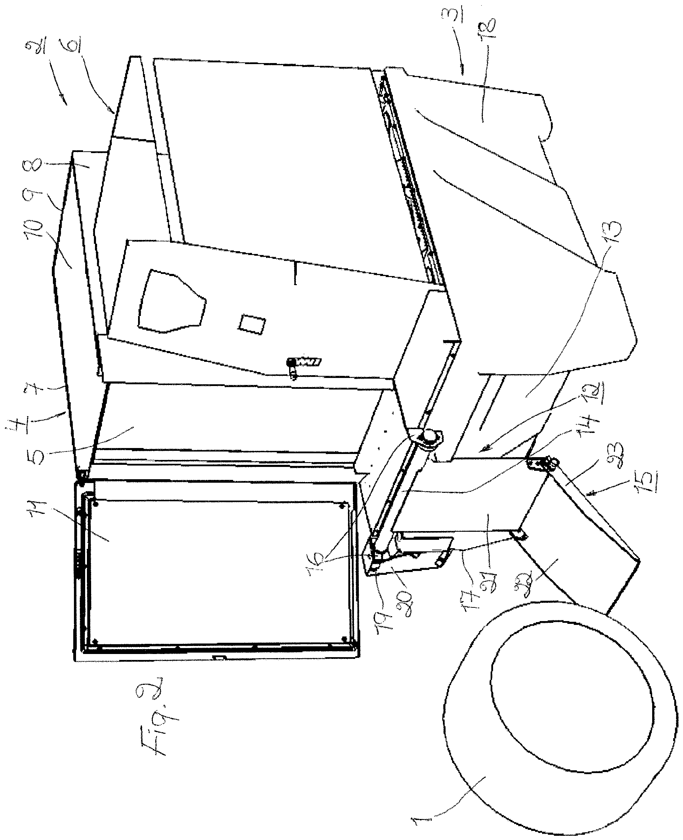

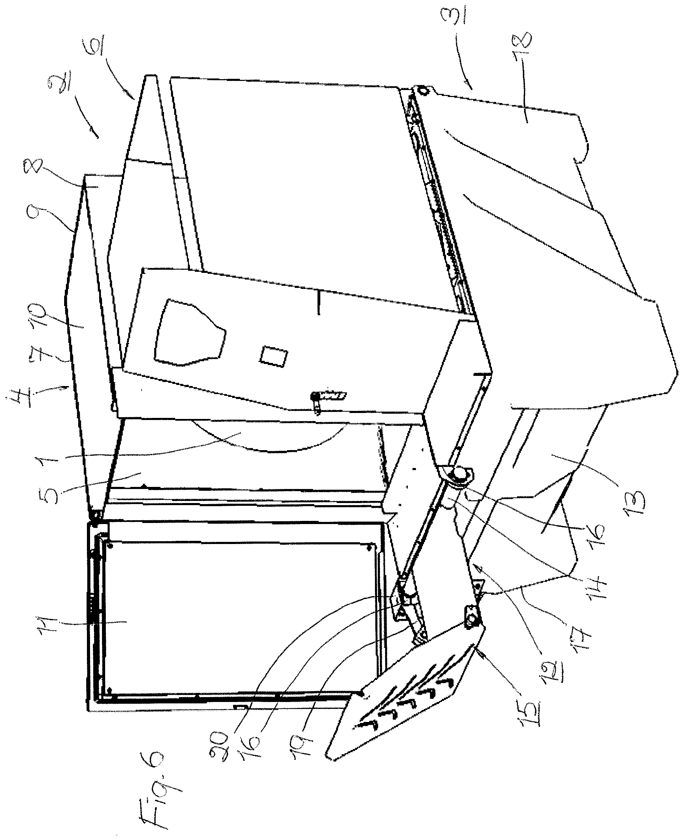

Two carrier rolls are rotatably mounted down below in the cleaning chamber 5. At least one of the carrier rolls may thereby be rotatably driven by means of a motor of a suitable type. This carrier roll and the motor will then form parts of the driving device located in the housing 6 of the cleaning device 2 for accomplishing said rotary motion. The rotatably driven carrier roll is configured to rotate the vehicle wheel 1 when said vehicle wheel has been located in the cleaning chamber 5 for cleaning of the vehicle wheel. The weight of the vehicle wheel 1 and the rubber material in the tire are sufficient to, together with a suitable configuration of the driven carrier roll, ensure a safe rotation of the vehicle wheel. The vehicle wheel 1 can be brought to rotate at a speed of e.g. 80-200 rpm, but the speed of rotation can be higher as well as lower. The vehicle wheel 1 is rotated relative to at least two flushing nozzles which are movably or immovably mounted in the cleaning chamber 5. The flushing nozzles are provided in the cleaning chamber 5 such that the vehicle wheel 1 can be located between said flushing nozzles for cleaning, preferably standing upright between said flushing nozzles as schematically illustrated in fig. 6. It is possible to configure the driving device such that the vehicle wheel 1 by means thereof can be brought to perform other movements than rotary movements relative to the flushing nozzles for cleaning of the vehicle wheel. Alternatively, as indicated, it is possible also to configure the driving device of the cleaning device 2 such that instead of the vehicle wheel 1 the flushing nozzles are brought to rotate and/or be driven to move in other ways relative to the vehicle wheel or such that the vehicle wheel is brought to rotate and/or move in other ways relative to the flushing nozzles while at the same time said flushing nozzles are brought to rotate and/or move in other ways relative to the vehicle wheel in order to thereby increase the cleaned surface on the vehicle wheel. The flushing nozzles may e.g. be provided on a pivotally mounted arm which permits the flushing nozzles to move over a working area which ex-tends across the vehicle wheel 1 and this may occur at the same time the vehicle wheel e.g. rotates. As indicated, more than two flushing nozzles may also be provided in the cleaning chamber 5. The cleaning chamber 5 is in the illustrated embodiment limited on top by the housing 4, which is made up of side walls 7 and 8, a rear wall 9 and an upper wall 10 and an opening into the cleaning chamber can be closed by a door 11. The door 11 is closed in fig. 1 and open in fig. 2. Alternatively, the cleaning chamber 5 can be limited on top by a hood which can be lowered over the vehicle wheel 1 and instead of a door, a curtain of any suitable material can be used.

The cleaning device 2 may, if needed, be configured with support devices of any suitable type, e.g. frames with rolls which engage the vehicle wheel 1, in order to ensure that the vehicle wheel remains standing upright between the flushing nozzles in the cleaning chamber 5.

As mentioned above, a pump device also forms a part of the cleaning device 2. The pump device is provided with flow connection to the cleaning liquid in the cleaning medium container 3. The pump device may thereby optionally, if necessary and depending on e.g. the type of pump device, be located in the cleaning medium container 3, on the outside of the cleaning medium container or in any other position externally of the cleaning medium container, e.g. in the housing 6 beside the housing 4 defining the cleaning chamber 5 as illustrated in the drawings. The pump device preferably comprises a pump which is operated by a motor and which is configured to suck cleaning liquid through a conduit. The cleaning liquid is with a pressure of e.g. about 3 bars brought to flow to the flushing nozzles via at least one, preferably two pump outlets in the pump device and via conduits extending from said pump outlets, and is discharged from said flushing nozzles as flushing jets towards at least the sides of the vehicle wheel 1 when said vehicle wheel has been located in the cleaning chamber 5, for cleaning the vehicle wheel while said wheel is rotated by means of the driving device. Hereby, the inner side as well as the outer side of the rim of the vehicle wheel 1 and both sides of the tire are cleaned, but essentially not the tire tread.

In order to be able to control where the forces from the jets of cleaning liquid directed towards the sides of the vehicle wheel 1 is applied, such that these forces substantially counteract and balance each other, the flushing nozzles are preferably configured for fixed setting thereof. Setting of the flushing nozzles can be carried through spatially on both sides of the vehicle wheel 1, i.e. vertically up and down along each side of the vehicle wheel, horizontally along the side and towards and away from the vehicle wheel side. Setting is preferably carried through spatially on each side of the vehicle wheel 1 within an area which covers the lower half of the respective side of the vehicle wheel for generation of a flushing jet which covers this area.

The angle of the flushing nozzles relative to the vehicle wheel 1 can also be varied and different nozzles can be set in different angles.

The cleaning device 2 defined in general above also comprises, according to the present invention, a lifting device 12 which is mounted on the cleaning device. This lifting device 12 is configured, from a start position for rolling the vehicle wheel 1 which is to be located in the cleaning chamber 5 on to said lifting device, to lift by a vertical or substantially vertical movement the vehicle wheel up to a position in front of the opening into the cleaning chamber to permit movement of the vehicle wheel into the cleaning chamber and location of the vehicle wheel between the flushing nozzles therein for cleaning of the vehicle wheel. The lifting device is also configured, after cleaning and movement of the vehicle wheel out of the cleaning chamber and on to the lifting device in front of the opening into the cleaning chamber, to lower by a vertical or substantially vertical movement the vehicle wheel to the start position for unrolling of the vehicle wheel from the lifting device.

As noted above, it is now possible to move the cleaning device to another place when necessary for maintenance, change of cleaning liquid etc.. It is now also possible to perform by means of this lifting device a simple movement solely in vertical or substantially vertical direction and thereby permit movement or displacement without problems of a vehicle wheel into and out of the cleaning chamber without subjecting the bodies of the personnel operating the cleaning device to harmful loads, because the personnel do not need at any time to lift the vehicle wheel. Furthermore, it should be pointed out that by positioning the vehicle wheel in front of or opposite to the opening into the cleaning chamber by performing said vertical or substantially vertical lifting movement of the vehicle wheel, it is ensured that all vehicle wheels, also those which laterally seen are situated offset relative to a central line through the cleaning chamber in the direction of movement of the vehicle wheel into the cleaning chamber but still within the lateral extension of said opening, can be moved into the cleaning chamber without previous lateral displacement of the vehicle wheels.

To achieve said objects by means of a simply configured lifting device, said lifting device 12 is preferably mounted on a front side of the cleaning device 2.

To achieve said objects and in order to further simplify the configuration of the lifting device, said lifting device 12 comprises in the illustrated embodiment an externally on the front side of the cleaning device, e.g. on the front side 13 of the cleaning medium container 3, rotatably mounted rod 14 and an anguarly configured bracket 15 for the vehicle wheel 1, which bracket is immovably connected to the rod. Hereby, the required vertical movement is easily achieved by means of a lifting device having a simple construction.

The rotatable rod 14 is rotatably journalled in attachments 16 on the front side of the cleaning device 2, e.g. on the front side 13 of the cleaning medium container 3 or any other part or member of the cleaning device. One attachment 16 is in the illustrated embodiment mounted at one of the side surfaces 17, 18 of the cleaning medium container 3, namely that side surface 17 which in the illustrated embodiment also carries a driving device for the rotatable rod 14, and thereby for the entire lifting device 12, while the other attachment 16 is found substantially in the middle of the front side 13 of the cleaning medium container, such that the distance between the attachments, and thereby the length of the rod, substantially corresponds to the width of the cleaning chamber 5 right in front of which the rotatable rod is located. The driving device for the rotatable rod 14 is connected to said rod by means of an articulated arm 19. The driving device may e.g. comprise an electrically, pneumatically or hydraulically driven piston assembly, whereby the free end of the piston thereof is connected to one end of the articulated arm 19 such that the articula-ted arm can pivot relative to said piston assembly when said piston assembly is activated and the piston thereof is displaced out of or into the cylinder, and whereby the opposite end of said articulated arm is immovably connected to the rotatable rod 14 such that the rod will be rotated by the articulated arm when sais arm is pivoted. The driving device may be protected by a covering 20 on the side surface 17. This covering 20 may also be con-figured to define said one attachment for the rotatable mounting of the rotatable rod 14 at the side surface 17 of the cleaning medium container 3.

The angularly configured bracket 15 comprises in turn a first member 21 which extends from the rotatable rod 14 and a second member 22 which extends from the free end of said first member, i.e. the second member is connected to the end of the first member opposite to the end thereof which is immovably connected to the rod. The first member 21 of the bracket 15 extending from the rotatable rod 14 has a length which substantially corresponds to the distance between the rod and a support for the cleaning device 2, normally the floor of a space in which the cleaning device is located, and since the bracket has an angular configuration, the second member 22 of the bracket extends from the free end of the first member at an angle relative to said first member. As is apparent particularly from fig. 1, the second member 22 of the bracket 15 is also pivotable relative to the first member 21 of the bracket such that when the cleaning device is not used, said second member can be pivoted or folded upwards against the first member and locked in that position or remain in that position by its weight, whereby the space in front of the cleaning device is kept free for other purposes.

In the illustrated embodiment, the first and second members 21, 22 of the bracket 15 are configured as plates. Alternatively, the first and second members 21, 22 of the bracket 15 may be configured as forks or similar or consist of e.g. tube-like members.

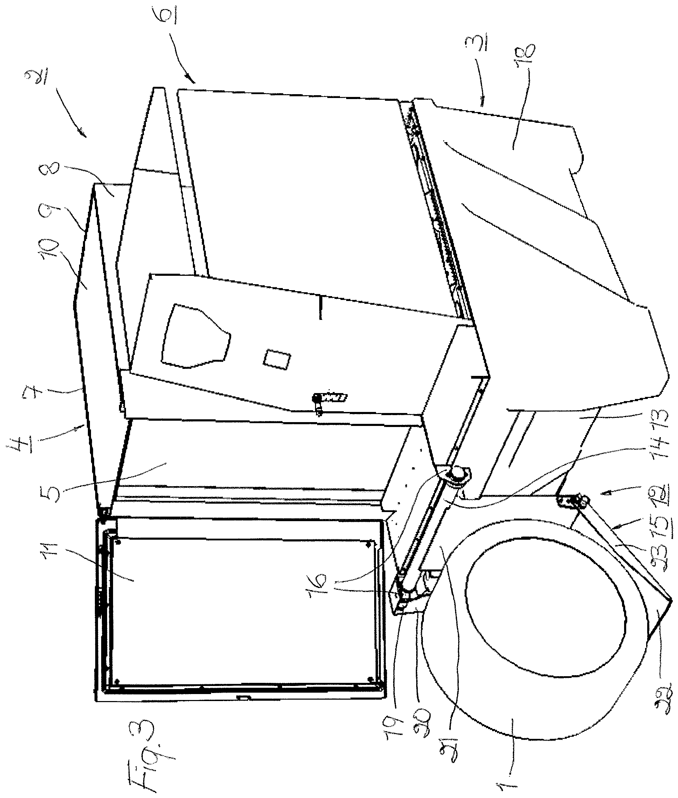

For cleaning of a vehicle wheel 1 by means of a cleaning device 2 according to the embodiment illustrated in fig. 1 to 6, the vehicle wheel is positioned standing in the cleaning chamber 5, possibly with support from support devices in the cleaning chamber. This is performed by means of the lifting device 12 which accordingly, from a start position for rolling the vehicle wheel 1 which is to be located in the cleaning chamber 5 on to said lifting device, shall lift the vehicle wheel up to a position in front of the opening into the cleaning chamber to permit movement of the vehicle wheel into the cleaning chamber, and is carried through such that the vehicle wheel from the start position according to fig. 2 for the cleaning device, i.e. with the door 11 into the cleaning chamber 5 open, is rolled--on to the second member 22 of the bracket 15, which in this position completely or partly rests on the support for the cleaning device, until the vehicle wheel is brought in contact and kept in engagement with the first member 21 of the bracket, which accordingly functions as a stop for the vehicle wheel. This position is illustrated in fig. 3.

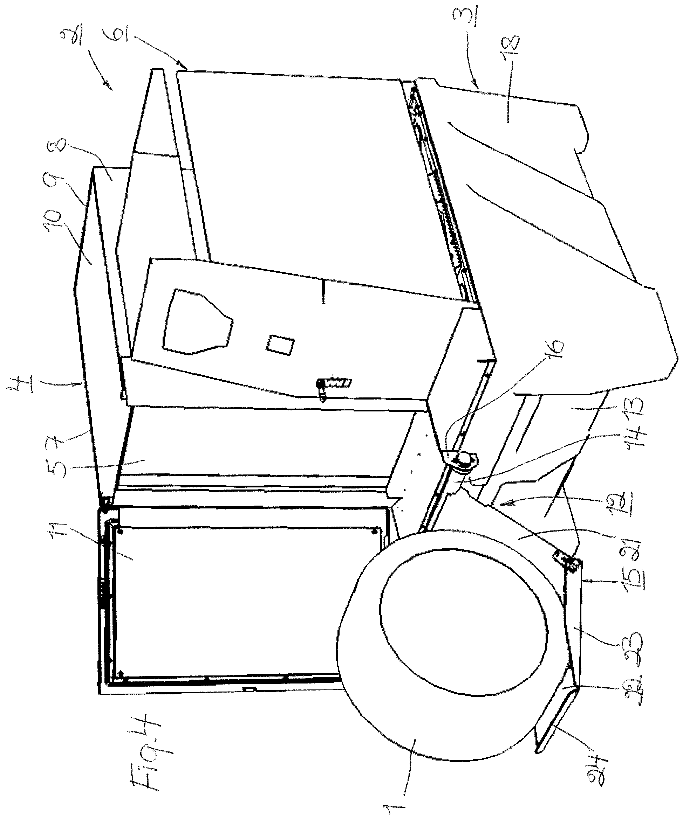

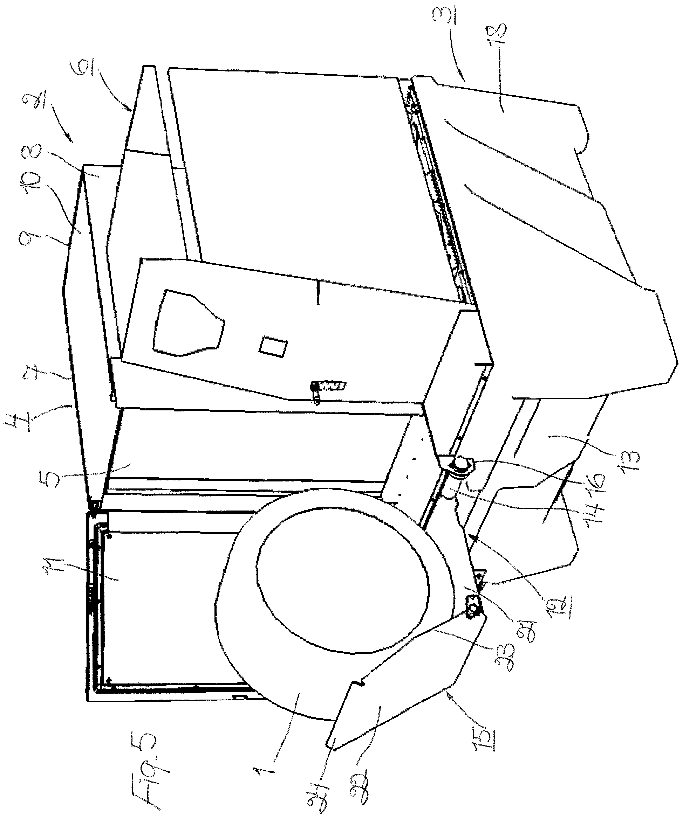

The vehicle wheel 1 is now lifted upwards in a vertical or substantially vertical direction to a position in front of the opening into the cleaning chamber 5 by activating the driving device for the rotatable rod 14 and thereby rotating said rod such that the first member 21 of the bracket 15 is moved or displaced from the substantially vertical position according to fig. 3 to a substantially horizontal position for movement, i.e. rolling, of the vehicle wheel into the cleaning chamber. This displacement is illustrated in fig. 4 and 5. At the same time, the second member 22 of the bracket 15 is displaced from its rolling-on position completely or partly resting on the support for the cleaning device 2 to a position in which the vehicle wheel 1 can be unrolled from the first member 21 of the bracket and via said first member into the cleaning chamber 5, since said first member now carries the vehicle wheel.

It is obvious that by means of the angularly configured bracket 15, the vehicle wheel 1 is supported in all positions on the bracket, such that the personnel at no time during the lifting operation need to carry the whole weight of the vehicle wheel. Possibly, the personnel only need to see to that the vehicle wheel does not fall off the lifting device during lifting of the vehicle wheel.

Also, it should be noted that the door 11 need not be opened before the vehicle wheel 1 has reached the position according to fig. 5 if there is sufficient room for opening the door when the lifting device 11 with the vehicle wheel has reached said position.

The position with the vehicle wheel 1 inside the cleaning chamber 5 is illustrated in fig. 6.

The operation for cleaning of the vehicle wheel 1 then starts preferably by means of a programmable control unit which activates and drives the rotary device and the pump device. The driven carrier roll is brought to rotate and the vehicle wheel 1 is thereby also brought to rotate relative to the flushing nozzles while at the same time the pump, via the pump outlets, brings the cleaning liquid in the cleaning medium container 3 to flow to said flushing nozzles for discharge therefrom as flushing jets towards the sides of the vehicle wheel situated in the cleaning chamber, particularly the sides of the rim, for cleaning the vehicle wheel, whereupon the cleaning liquid containing loose contaminants flows back to the cleaning medium container. Coarse contaminants are separated from the cleaning liquid in a suitable manner in the cleaning medium container 3 or are allowed to sink and deposit at the bottom of the container for later removal therefrom, while finer contaminants can be allowed to recirculate with the cleaning liquid. After a predetermined time period the control unit deactivates the pump device, but the vehicle wheel 1 is allowed to rotate for an additional time period in order to, by means of the centrifugal force, throw away granules that possibly are included in the cleaning liquid and that might have been cought in the tread pattern and possible remaining contaminants at the same time the vehicle wheel can be blown clean and dry.

The lifting device 12 is activated after the cleaning and movement, i.e. rolling, of the vehicle wheel 1 out of the cleaning chamber 5 and up onto the lifting device in order to lower the vehicle wheel to the start position for unrolling of the vehicle wheel from the lifting device. This is carried through by again rolling the vehicle wheel 1 on to the first member 21 of the bracket 15 until the vehicle wheel is brought in contact and held in engagement with the second member 22 of the bracket. The vehicle wheel 1 is lowered by activating the driving device for the rotatable rod 14 for rotation thereof such that the first member 21 of the bracket 15 is displaced from the substantially horizontal position according to fig. 5 to the substantially vertical position according to fig. 3. At the same time, the second member 22 of the bracket 15 is displaced from its stop position according to fig. 5 to the rolling-on po-sition completely or partly resting on the support for the cleaning device 2, such that the vehicle wheel now easily can be unrolled from said second member of the bracket.

It is obvious that by means of the angularly configured bracket 15, the vehicle wheel 1 is supported in all positions on the bracket, such that the personnel at no time during the lowering operation need to carry the whole weight of the vehicle wheel, possibly only see to that the vehicle wheel does not fall off the lifting device during lowering of the vehicle wheel.

It is obvious to a skilled person that the cleaning device 2 according to the present invention can be modified and altered within the scope of the subsequent claims without departing from the idea and purpose of the invention. Accordingly, the present invention shall not be regarded as limited to the embodiment described above and illustrated in the drawings. Instead, the invention is defined by the subsequent claims, with reference to the description and drawings for full understanding of the invention. Thus, as an alternative, it is possible to configure the bracket 15 such that the angle between the first and second members 21, 22 thereof instead of being larger than 90° as illustrated in the drawings, is substantially 90°. Thereby, the second member 22 of the bracket 15 will be displaceable between a substantially horizontal rolling-on and unrolling position for the vehicle wheel 1 and a substantially vertical stop position for the vehicle wheel during movement of the vehicle wheel into and out of the cleaning chamber 5 via the first member 21 of the bracket 15. Hereby, it will not be necessary to hold or support the vehicle wheel with the same force during lifting and lowering thereof by means of the above-mentioned lifting device as at the illustrated embodiment thereof. Also, the first and second members 21, 22 of the bracket 15 can be provided with support members for reinforcement of said first and second members as well as for securing or holding the vehicle wheel in position during lifting and lowering thereof. In the illustrated embodiment, the second member 22 of the bracket 15 is provided with such support members 23 and 24. In fig. 1 to 3, the support member 24 at the end of the second member 22 opposite to the end thereof which is connected to the first member 21 of the bracket 15, is folded down to permit rolling-on and unrolling of a vehicle wheel 1 and in fig. 4 to 6, said end support member is folded up to prevent unrolling of the vehicle wheel.

## Claims

1. Device for cleaning vehicle wheels, wherein the cleaning device (2) comprises:
a cleaning medium container (3) with a cleaning liquid,
a cleaning chamber (5) which is provided on top of the cleaning medium container (3) and having flushing nozzles provided therein,
a driving device which is configured to bring a vehicle wheel (1) which is to be located in the cleaning chamber (5) between the flushing nozzles, to move relative to said flushing nozzles and/or to bring said flushing nozzles to move relative to the vehicle wheel (1), and
a pump device which is configured to bring the cleaning liquid to flow from the cleaning medium container (3) to the flushing nozzles and from said flushing nozzles as flushing jets towards the vehicle wheel (1) which is to be located in the cleaning chamber (5) for cleaning the vehicle wheel (1) while said flushing nozzles and/or the vehicle wheel are/is brought to move by means of the driving device,
**characterized in**
**that** the cleaning device (2) further comprises a lifting device (12) which is mounted on the cleaning device (2) and which is configured, from a start position for rolling the vehicle wheel (1) which is to be located in the cleaning chamber (5) on to said lifting device (12), to lift by a vertical or substantially vertical movement the vehicle wheel (1) up to a position in front of an opening into the cleaning chamber (5) to permit movement of the vehicle wheel (1) into the cleaning chamber (5) and location of the vehicle wheel (1) between the flushing nozzles therein for cleaning of the vehicle wheel (1), and configured, after cleaning and movement of the vehicle wheel (1) out of the cleaning chamber (5) and on to the lifting device (12) in front of the opening into the cleaning chamber (5), to lower by a vertical or substantially vertical movement the vehicle wheel (1) to the start position for unrolling of the vehicle wheel (1) from the lifting device (12).

2. Device for cleaning vehicle wheels according to claim 1, **characterized in that** the lifting device (12) is mounted on a front side of the cleaning device (2).

3. Device for cleaning vehicle wheels according to claim 2, **characterized in that** the lifting device (12) comprises an externally on the front side of the cleaning device (2) rotatably mounted rod (14) and an angulary configured bracket (15) for a vehicle wheel (1), said bracket (15) being immovably connected to the rod (14).

4. Device for cleaning vehicle wheels according to claim 3, **characterized in that** the angularly configured bracket (15) comprises a first member (21) which extends from the rotatable rod (14) and a second member (22) which extends from the free end of said first member (21).

5. Device for cleaning vehicle wheels according to claim 4, **characterized in that** the first member (21) of the bracket (15) extending from the rotatable rod (14) has a length which substantially corresponds to the distance between the rod (14) and a support for the cleaning device (2), and that the second member (22) of the bracket (15) extends from the free end of the first member (21) at an angle relative to said first member (21).

6. Device for cleaning vehicle wheels according to claim 5, **characterized in that** the first member (21) of the bracket (15) during rotation of the rotatable rod (14) is displaceable between a substantially vertical stop position for the vehicle wheel (1) during rolling-on and unrolling of the vehicle wheel (1) to and from the second member (22) of the bracket (15) respectively, and a substantially horizontal position for movement of the vehicle wheel (1) into and out of the cleaning chamber (5) respectively, via said first member (21), and that said second member (22) of the bracket (15) during rotation of the rotatable rod (14) at the same time is displaceable between a rolling-on and unrolling position for the vehicle wheel (1) to and from said second member (22) respectively, in which said second member (22) completely or partly rests on the support, and a stop position for the vehicle wheel (1) during movement of the vehicle wheel (1) into and out of the cleaning chamber (5) respectively, via the first member (21) of the bracket (15).

7. Device for cleaning vehicle wheels according to claim 6, **characterized in that** the second member (22) of the bracket (15) extending from the free end of the first member (21) of said bracket (15), extends substantially perpendicular to said first member (21), and that said second member (22) of the bracket (15) during rotation of the rotatable rod (14) thereby is displaceable between a substantially horizontal rolling-on and unrolling position for the vehicle wheel (1) to and from said second member (22) respectively, in which said second member completely or partly rests on the support, and a substantially vertical stop position for the vehicle wheel (1) during movement of the vehicle wheel (1) into and out of the cleaning chamber (5) respectively, via the first member (21) of the bracket (15).

8. Device for cleaning vehicle wheels according to any one of claims 3 to 7, **characterized in that** the second member (22) of the bracket (15) is pivotally connected to the first member (21) of the bracket (15).

9. Device for cleaning vehicle wheels according to any one of claims 3 to 8, **characterized in that** the first and second members (21, 22) of the bracket (15) are configured as plates.

10. Device for cleaning vehicle wheels according to any one of claims 3 to 9, **characterized in that** the first and/or second member (21, 22) of the bracket (15) is/ /are provided with support members (23, 24).

11. Device for cleaning vehicle wheels according to any one of claims 3 to 10, **characterized in that** the rotatable rod (14) is configured to be driven by a driving device which is mounted on one (17) of the side surfaces (17, 18) of the cleaning medium container (3) and which is connected to the rod (14) through an articulated arm (19).

## Patentansprüche

1. Gerät zum Reinigen von Fahrzeugreifen, wobei das Reinigungsgerät (2) umfasst:
einen Reinigungsmediumbehälter (3) mit einer Reinigungsflüssigkeit,
eine Reinigungskammer (5), die oben auf dem Reinigungsmediumbehälter (3) bereitgestellt ist und in der Spülstutzen bereitgestellt sind,
ein Antriebsgerät, das dafür eingerichtet ist, ein Fahrzeugrad (1), das in der Reinigungskammer (5) zwischen den Spülstutzen anzuordnen ist, dazu zu bringen, sich relativ zu den Spülstutzen zu bewegen und/oder die Spülstutzen dazu zu bringen, sich relativ zu dem Fahrzeugrad (1) zu bewegen, und
ein Pumpgerät, das dafür eingerichtet ist, die Reinigungsflüssigkeit dazu zu bringen, von dem Reinigungsmediumbehälter (3) zu den Spülstutzen und von den Spülstutzen als Spülstrahlen zu dem Fahrzeugrad (1), das zum Reinigen des Fahrzeugrads (1) in der Reinigungskammer (5) anzuordnen ist, zu fließen, während die Spülstutzen und/oder das Fahrzeugrad mittels des Antriebsgeräts dazu gebracht werden/wird, sich zu bewegen,
**dadurch gekennzeichnet,**
**dass** das Reinigungsgerät (2) ferner ein Hebegerät (12) umfasst, das an dem Reinigungsgerät (2) befestigt ist und das dafür eingerichtet ist, das Fahrzeugrad (1) von einer Startposition zum Rollen des Fahrzeugrads (1), das in die Reinigungskammer (5) anzuordnen ist, auf das Hebegerät (12) durch eine vertikale oder im Wesentlichen vertikale Bewegung nach oben auf eine Position vor einer Öffnung in die Reinigungskammer (5) anzuheben, um Bewegung des Fahrzeugrads (1) in die Reinigungskammer (5) und Anordnen des Fahrzeugrads (1) zwischen den darin befindlichen Spülstutzen zum Reinigen des Fahrzeugrads (1) zu erlauben, und das dafür eingerichtet ist, das Fahrzeugrad (1) nach Reinigen und Bewegung des Fahrzeugrads (1) heraus aus der Reinigungskammer (5) und auf das Hebegerät (12) vor der Öffnung in die Reinigungskammer (5) zum Wegrollen des Fahrzeugrads (1) von dem Hebegerät (12) durch eine vertikale oder im Wesentlichen vertikale Bewegung auf die Startposition abzusenken.

2. Gerät zum Reinigen von Fahrzeugreifen nach Anspruch 1, **dadurch gekennzeichnet, dass** das Hebegerät (12) an einer Vorderseite des Reinigungsgeräts (2) montiert ist.

3. Gerät zum Reinigen von Fahrzeugreifen nach Anspruch 2, **dadurch gekennzeichnet, dass** das Hebegerät (12) eine extern an der Vorderseite des Reinigungsgeräts (2) rotierbar montierte Stange (14) und eine winkelförmig eingerichtete Halterung (15) für ein Fahrzeugrad (1) umfasst, wobei die Halterung (15) unbeweglich mit der Stange (14) verbunden ist.

4. Gerät zum Reinigen von Fahrzeugreifen nach Anspruch 3, **dadurch gekennzeichnet, dass** die winkelförmig eingerichtete Halterung (15) ein erstes Glied (21), das sich von der rotierbaren Stange (14) weg erstreckt, und ein zweites Glied (22), das sich von dem freien Ende des ersten Glieds (21) weg erstreckt, umfasst.

5. Gerät zum Reinigen von Fahrzeugreifen nach Anspruch 4, **dadurch gekennzeichnet, dass** das erste Glied (21) der Halterung (15), das sich von der rotierbaren Stange (14) weg erstreckt, eine Länge hat, die im Wesentlichen mit dem Abstand zwischen der Stange (14) und einer Stütze für das Reinigungsgerät (2) korrespondiert, und dass das zweite Glied (22) der Halterung (15) sich von dem freien Ende des ersten Glieds (21) in einem Winkel relativ zu dem ersten Glied (21) weg erstreckt.

6. Gerät zum Reinigen von Fahrzeugreifen nach Anspruch 5, **dadurch gekennzeichnet, dass** das erste Glied (21) der Halterung (15) während Rotation der rotierbaren Stange (14) zwischen einer im Wesentlichen vertikalen Stoppposition für das Fahrzeugrad (1) während des Heraufrollens und Wegrollens des Fahrzeugrads (1) entsprechend auf das und von dem zweiten Glied (22) der Halterung (15) und einer im Wesentlichen horizontalen Position zur Bewegung des Fahrzeugrads (1) entsprechend hinein in die und heraus aus der Reinigungskammer (5), über das erste Glied (21), verlagerbar ist, und dass das zweite Glied (22) der Halterung (15) während Rotation der drehbaren Stange (14) gleichzeitig zwischen einer Heraufroll- und Wegrollposition für das Fahrzeugrad (1) entsprechend hinauf auf und herunter von dem zweiten Glied (22), in der das zweite Glied (22) vollständig oder teilweise auf der Stütze ruht, und einer Stoppposition für das Fahrzeugrad (1) während Bewegung des Fahrzeugrads (1) entsprechend hinein in die und heraus aus der Reinigungskammer (5), über das erste Glied (21) der Halterung (15), verlagerbar ist.

7. Gerät zum Reinigen von Fahrzeugreifen nach Anspruch 6, **dadurch gekennzeichnet, dass** das zweite Glied (22) der Halterung (15), das sich von dem freien Ende des ersten Glieds (21) der Halterung (15) weg erstreckt, sich im Wesentlichen senkrecht zu dem ersten Glied (21) erstreckt, und dass das zweite Glied (22) der Halterung (15) während Rotation der drehbaren Stange (14) dadurch zwischen einer im Wesentlichen horizontalen Heraufroll- und Wegrollposition für das Fahrzeugrad (1) entsprechend hinauf auf und hinab von dem zweiten Glied (22), in der das zweite Glied vollständig oder teilweise auf der Stütze ruht, und einer im Wesentlichen vertikalen Stoppposition für das Fahrzeugrad (1) während Bewegung des Fahrzeugrads (1) entsprechend hinein in und heraus aus der Reinigungskammer (5), über das erste Glied (21) der Halterung (15), verlagerbar ist.

8. Gerät zum Reinigen von Fahrzeugreifen nach einem der Ansprüche 3 bis 7, **dadurch gekennzeichnet, dass** das zweite Glied (22) der Halterung (15) schwenkbar mit dem ersten Glied (21) der Halterung (15) verbunden ist.

9. Gerät zum Reinigen von Fahrzeugreifen nach einem der Ansprüche 3 bis 8, **dadurch gekennzeichnet, dass** die ersten und zweiten Glieder (21, 22) der Halterung (15) als Platten eingerichtet sind.

10. Gerät zum Reinigen von Fahrzeugreifen nach einem der Ansprüche 3 bis 9, **dadurch gekennzeichnet, dass** das erste und/oder zweite Glied (21, 22) der Halterung (15) mit Stützgliedern (23, 24) versehen ist/sind.

11. Gerät zum Reinigen von Fahrzeugreifen nach einem der Ansprüche 3 bis 10, **dadurch gekennzeichnet, dass** die rotierbare Stange (14) dafür eingerichtet ist, durch ein Antriebsgerät, das an einer (17) der Seitenoberflächen (17, 18) des Reinigungsmediumbehälters (3) montiert ist und das mit der Stange (14) durch einen Gelenkarm (19) verbunden ist, angetrieben zu werden.

## Revendications

1. Dispositif pour nettoyer des roues de véhicule, dans lequel le dispositif de nettoyage (2) comprend :
un récipient d'agent de nettoyage (3) avec un liquide de nettoyage,
une chambre de nettoyage (5) qui est fournie sur le récipient d'agent de nettoyage (3) et ayant des buses de rinçage fournies dans celle-ci,
un dispositif d'entraînement qui est configuré pour amener une roue de véhicule (1) qui doit être placée dans la chambre de nettoyage (5) entre les buses de rinçage, à se déplacer par rapport auxdites buses de rinçage et/ou pour amener lesdites buses de rinçage à se déplacer par rapport à la roue de véhicule (1), et
un dispositif de pompe qui est configuré pour amener le liquide de nettoyage à s'écouler depuis le récipient d'agent de nettoyage (3) vers les buses de rinçage et depuis lesdites buses de rinçage sous forme de jets de rinçage vers la roue de véhicule (1) qui doit être placée dans la chambre de nettoyage (5) pour nettoyer la roue de véhicule (1) que lesdites buses de rinçage et/ou la roue de véhicule sont amenées/est amenée à se déplacer à l'aide du dispositif d'entraînement,
**caractérisé en ce que**
le dispositif de nettoyage (2) comprend en outre un dispositif de levage (12) qui est monté sur le dispositif de nettoyage (2) et qui est configuré, depuis une position de départ pour faire rouler la roue de véhicule (1) qui doit être placée dans la chambre de nettoyage (5) sur ledit dispositif de levage (12), pour lever par un déplacement vertical ou sensiblement vertical la roue de véhicule (1) jusqu'à une position devant une ouverture dans la chambre de nettoyage (5) afin de permettre le déplacement de la roue de véhicule (1) dans la chambre de nettoyage (5) et le placement de la roue de véhicule (1) entre les buses de rinçage qui s'y trouvent pour le nettoyage de la roue de véhicule (1), et configuré, après le nettoyage et le déplacement de la roue de véhicule (1) à l'extérieur de la chambre de nettoyage (5) et sur le dispositif de levage (12) devant l'ouverture dans la chambre de nettoyage (5), pour abaisser par un déplacement vertical ou sensiblement vertical la roue de véhicule (1) jusqu'à la position de départ pour dérouler la roue de véhicule (1) hors du dispositif de levage (12).

2. Dispositif pour nettoyer des roues de véhicule selon la revendication 1, **caractérisé en ce que** le dispositif de levage (12) est monté sur un côté avant du dispositif de nettoyage (2).

3. Dispositif pour nettoyer des roues de véhicule selon la revendication 2, **caractérisé en ce que** le dispositif de levage (12) comprend une tige (14) montée extérieurement en rotation sur le côté avant du dispositif de nettoyage (2) et un support angulairement configuré (15) pour une roue de véhicule (1), ledit support (15) étant connecté de manière fixe à la tige (14).

4. Dispositif pour nettoyer des roues de véhicule selon la revendication 3, **caractérisé en ce que** le support angulairement configuré (15) comprend un premier élément (21) qui s'étend depuis la tige rotative (14) et un deuxième élément (22) qui s'étend depuis l'extrémité libre dudit premier élément (21).

5. Dispositif pour nettoyer des roues de véhicule selon la revendication 4, **caractérisé en ce que** le premier élément (21) du support (15) s'étendant depuis la tige rotative (14) a une longueur qui correspond sensiblement à la distance entre la tige (14) et un élément de soutien pour le dispositif de nettoyage (2), et **en ce que** le deuxième élément (22) du support (15) s'étend depuis l'extrémité libre du premier élément (21) selon un angle par rapport audit premier élément (21).

6. Dispositif pour nettoyer des roues de véhicule selon la revendication 5, **caractérisé en ce que** le premier élément (21) du support (15) durant la rotation de la tige rotative (14) peut être déplacé entre une position d'arrêt sensiblement verticale pour la roue de véhicule (1) durant le roulement et le déroulement de la roue de véhicule (1) vers et depuis le deuxième élément (22) du support (15) respectivement, et une position sensiblement horizontale pour le déplacement de la roue de véhicule (1) dans et hors de la chambre de nettoyage (5) respectivement, via ledit premier élément (21), et **en ce que** ledit deuxième élément (22) du support (15) durant la rotation de la tige rotative (14) en même temps peut être déplacé entre des positions de roulement et de déroulement pour la roue de véhicule (1) vers et depuis ledit deuxième élément (22) respectivement, dans lesquelles ledit deuxième élément (22) repose complètement ou partiellement sur le support, et une position d'arrêt pour la roue de véhicule (1) durant le déplacement de la roue de véhicule (1) dans et hors de la chambre de nettoyage (5), respectivement, via le premier élément (21) du support (15).

7. Dispositif pour nettoyer des roues de véhicule selon la revendication 6, **caractérisé en ce que** le deuxième élément (22) du support (15) s'étendant depuis l'extrémité libre du premier élément (21) dudit support (15), s'étend de manière sensiblement perpendiculaire audit premier élément (21), et **en ce que** ledit deuxième élément (22) du support (15) durant la rotation de la tige rotative (14) peut être ainsi déplacé entre une position de roulement et de déroulement sensiblement horizontale pour la roue de véhicule (1) vers et depuis ledit deuxième élément (22) respectivement, dans laquelle ledit deuxième élément repose complètement ou partiellement sur l'élément de soutien, et une position d'arrêt sensiblement verticale pour la roue de véhicule (1) durant le déplacement de la roue de véhicule (1) dans et hors de la chambre de nettoyage (5) respectivement, via le premier élément (21) du support (15).

8. Dispositif pour nettoyer des roues de véhicule selon l'une quelconque des revendications 3 à 7, **caractérisé en ce que** le deuxième élément (22) du support (15) est connecté de manière pivotante au premier élément (21) du support (15).

9. Dispositif pour nettoyer des roues de véhicule selon l'une quelconque des revendications 3 à 8, **caractérisé en ce que** les premier et deuxième éléments (21, 22) du support (15) sont configurés comme des plaques.

10. Dispositif pour nettoyer des roues de véhicule selon l'une quelconque des revendications 3 à 9, **caractérisé en ce que** le premier et/ou le deuxième élément (21, 22) du support (15) est pourvu/sont pourvus d'éléments de soutien (23, 24).

11. Dispositif pour nettoyer des roues de véhicule selon l'une quelconque des revendications 3 à 10, **caractérisé en ce que** la tige rotative (14) est configurée pour être entraînée par un dispositif d'entraînement qui est monté sur une (17) des surfaces latérales (17, 18) du récipient d'agent de nettoyage (3) et qui est connecté à la tige (14) par le biais d'un bras d'articulation (19).
